(19) Europäisches Patentamt
European Patent Office
Office européen des brevets

(11) Veröffentlichungsnummer: **0 467 935 B1**

(12) # EUROPÄISCHE PATENTSCHRIFT

(45) Veröffentlichungstag der Patentschrift: **14.12.94**

(51) Int. Cl.$^{5}$: **C08F 20/22**, C08F 220/22, G09B 1/04

(21) Anmeldenummer: **90906164.0**

(22) Anmeldetag: **12.04.90**

(86) Internationale Anmeldenummer:
**PCT/EP90/00587**

(87) Internationale Veröffentlichungsnummer:
**WO 90/12040 (18.10.90 90/24)**

(54) **TRANSPARENTE THERMOPLASTISCHE FORMMASSE AUS 2,3-DIFLUORACRYLSÄUREESTERN.**

(30) Priorität: **13.04.89 DE 3912151**

(43) Veröffentlichungstag der Anmeldung:
**29.01.92 Patentblatt 92/05**

(45) Bekanntmachung des Hinweises auf die Patenterteilung:
**14.12.94 Patentblatt 94/50**

(84) Benannte Vertragsstaaten:
**AT BE CH DE ES FR GB IT LI NL SE**

(56) Entgegenhaltungen:
**GB-A- 609 156**

**Chemical Abstracts, Band 96, Nr. 8, 22. Februar 1982, (Columbus, Ohio, US), A.S. Tevlina et al.: "Copolymerization of alpha, beta, beta- trifluorostyrene with some vinyl monomers", siehe Seite 4, Zusammenfassung 52732s, & Deposited Doc. 1981, Viniti 127-81, 12 pp.**

(73) Patentinhaber: **HOECHST AKTIENGESELLSCHAFT**

**D-65926 Frankfurt (DE)**

(72) Erfinder: **GROH, Werner**
**Dieulefiter Strasse 7**
**D-6302 Lich (DE)**
Erfinder: **HERBRECHTSMEIER, Peter**
**Friedrich-Stolze-Strasse 10**
**D-6240 Königstein/Taunus (DE)**
Erfinder: **HEUMÜLLER, Rudolf**
**Strandpromenade 3**
**D-6054 Rodgau (DE)**
Erfinder: **THEIS, Jürgen**
**Am Tiergarten 40**
**D-6000 Frankfurt am Main (DE)**
Erfinder: **WIENERS, Gerhard**
**Glauburgstrasse 87**
**D-6000 Frankfurt am Main (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 467 935 B1

## Beschreibung

Die Erfindung bezieht sich auf amorphe Polymere, die Einheiten von 2,3-Difluoracrylsäureestern enthalten und eine hohe Glasübergangstemperatur und eine hohe Lichtdurchlässigkeit aufweisen.

Die Copolymerisation von 2,3-Difluoracrylsäuremethylester mit $\alpha,\beta,\beta$-Trifluorstyrol ist bekannt (vgl. Tevlina, A.S., et al., VINITI 127-81 (1981)). Eigenschaften der entstandenen Copolymeren wurden nicht veröffentlicht.

Eine transparente Formmasse, die Monomergruppen enthält, die sich von 2,3-Difluoracrylsäure fluor-, chlor- oder bromhaltiger polycyclischer Alkohole ableiten, ist ebenfalls bekannt geworden (vgl. DE 3707923). Über Eigenschaften dieser Verbindungen ist nichts bekannt.

Transparente thermoplastische Formmassen, welche sich von (Meth)Acrylsäureestern cyclischer Alkohole ableiten werden in der EP-A-282 019 beschrieben. Die Brechungsindices dieser Polymere liegen über 1,43, häufig sogar über 1,52.

Ferner ist ein optisches Material bekannt, das aus polymeren 2-Fluoracrylsäureestern insbesondere aliphatischer Alkohole besteht, die sowohl in der Alkohol- als auch in der $\beta$-Stellung der 2-Fluoracrylsäurekomponente Deuteriumatome enthalten können (vgl. EP 128517). Diese Polymere weisen Brechungsindices zwischen 1,45 und 1,60 und Glasübergangstemperaturen zwischen 100 und 200 °C auf und dienen als Kernmaterial für optische Fasern (Lichtwellenleiter).

Auch von Polymeren aus Fluoralkylestern der 2-Fluoracrylsäure sind Herstellung und Eigenschaften bekannt (vgl. EP 128516). Die Polymeren werden durch radikalisch initiierte Polymerisation der Monomeren in Masse, Lösung oder Suspension in Gegenwart eines Kettenübertragungsmittels bei einer Temperatur zwischen 0 und 100 °C hergestellt. Sie weisen Brechungsindices zwischen 1,36 bis 1,44 und Erweichungstemperaturen zwischen 80 und 140 °C auf.

Diese Polymeren enthalten noch zwei Wasserstoffatome in der Säurekomponente, gegebenenfalls noch weitere Wasserstoffatome in der Alkoholkomponente, wodurch die Transparenz der Polymeren im sichtbaren und im nahen Infrarotbereich des elektromagnetischen Spektrums beeinträchtigt wird.

Darüberhinaus wurde bereits vorgeschlagen, Lichtwellenleiter aus Poly(2-fluoracrylsäureestern) im Kern und entweder Poly(2,3-difluoracrylsäureestern) oder Copolymeren aus TFE, Perfluoralkylvinylethern und $\omega$-Alkoxycarbonyl(perfluoralkylvinylethern) im Mantel eines Lichtwellenleiters einzusetzen.

Aufgabe der Erfindung war die Bereitstellung eines Polymers, das zugleich eine hohe Lichtdurchlässigkeit im Wellenlängenbereich des sichtbaren Lichts und eine hohe Glasübergangstemperatur aufweist, das sich zu Lichtwellenleitern für hohe Übertragungslängen und hohe Dauergebrauchstemperaturen verarbeiten läßt.

Die Erfindung betrifft eine transparente thermoplastische Formmasse, bestehend aus
10 bis 100 Gew.-% an Einheiten, die sich von einem oder mehreren Estern der Formel I ableiten

$$CFX = CF - \underset{\underset{O}{\|}}{C} - OR \qquad (I),$$

worin
X ein Wasserstoffatom oder ein Deuteriumatom und
R eine lineare, oder verzweigte $C_1$-$C_{10}$-Alkylgruppe oder eine $C_6$-$C_{10}$-Arylgruppe ist, wobei in R die Wasserstoffatome ganz oder teilweise durch Fluor-, Chlor-, Brom- oder Deuteriumatome ersetzt sein können, und 90 bis 0 Gew.-% an Einheiten, die sich von anderen copolymerisierbaren Vinylverbindungen ableiten.

Die Erfindung betrifft ferner auch die Herstellung der Formmassen sowie ihre Verwendung zur Herstellung von optischen Gegenständen, insbesondere Lichtwellenleitern.

In Formel I ist X ein Wasserstoffatom oder ein Deuteriumatom und R eine lineare, oder verzweigte $C_1$-$C_{10}$-Alkylgruppeoder eine $C_6$-$C_{10}$-Arylgruppe, vorzugsweise Phenyl- oder Benzylgruppe, wobei in R die Wasserstoffatome ganz oder teilweise durch Fluor- Chlor- oder Bromatome ersetzt sein können.

Die Säurekomponente, die Bestandteil der Ester ist, besteht vorzugsweise aus 2,3-Difluoracrylsäure oder 3-Deutero-2,3-difluoracrylsäure, insbesondere 3-Deutero-2,3-difluoracrylsäure.

Die Alkoholkomponente ist vorzugsweise Methanol, ein fluor- oder chlorhaltiger, linearer oder verzweigter aromatischer Alkohol mit 2 bis 10 Kohlenstoffatomen. Besonders bevorzugt werden Methanol, fluor- und chlorhaltige verzweigte Alkohole mit 3 bis 10 Kohlenstoffatomen sowie Phenole und Benzylalkohol, insbesondere Methanol, Hexafluorisopropanol und 2-Deuterohexafluorisopropanol, alkyl- und arylsubstituierte

Hexafluorisopropanole wie Perfluor-2,3-dimethyl-2-butanol, 2-Pentafluorphenyl-hexafluorisopropanol und 2-(p-Fluorphenyl)hexafluorisopropanol, sowie Pentafluor-, Pentachlor- und Pentabromphenol.

Vorzugsweise werden diejenigen Ester, in deren Alkohol- oder in deren Säurekomponente die Wasserstoffatome möglichst vollständig durch Deuterium-, Fluor-, Chlor- oder Bromatome ersetzt sind, verwendet, insbesondere Ester der 2,3-Difluoracrylsäure oder der 3-Deutero-2,3-difluoracrylsäure mit Methanol-$d_3$, 2-Deuterohexafluorisopropanol, 3-Pentafluorphenylhexafluorisopropanol, Perfluor-2,3-dimethyl-2-butanol, Pentafluorphenol oder Pentachlorphenol.

Als Ausgangsmaterial zur Herstellung des erfindungsgemäßen fluorhaltigen Polymers dient eine Verbindung der Formel I

$$CFX = CF - \underset{\underset{O}{\|}}{C} - OR \qquad (I),$$

in der X ein Wasserstoffatom oder ein Deuteriumatom und R eine lineare, oder verzweigte $C_1$-$C_{10}$-Alkylgruppe oder eine $C_6$-$C_{10}$-Arylgruppe, wobei in R die Wasserstoffatome ganz oder teilweise durch Fluor-, Chlor- oder Bromatome ersetzt sein können, bedeutet.

Die vorgenannten 2,3-Difluoracrylsäureester können durch Veresterung von 2,3-Dichlor-2,3-difluorpropionsäure bzw. eines entsprechenden Säurehalogenids mit einem Alkohol der Formel

R-OH,

wobei R die in Formel I angegebene Bedeutung hat, und anschließende Dehalogenierung mit Zink hergestellt werden. Die entsprechenden 3-Deutero-2,3-difluoracrylsäureester erhält man durch Veresterung der 3-Deutero-2,3-difluoracrylsäure oder ihres Säurehalogenids mit einem Alkohol der obigen Formel.

Die erfindungsgemäße Formmasse besteht zu 10 bis 100, vorzugsweise zu 40 bis 100, besonders bevorzugt zu 50 bis 90 Gew.-% aus Einheiten, die sich von einem Ester der Formel I ableiten, und zu 90 bis 0 Gew.-%, vorzugsweise 60 bis 0 %, besonders bevorzugt zu 50 bis 10 % aus Einheiten, welche sich von anderen copolymerisierbaren Vinylverbindungen ableiten. Geeignete Vinylverbindungen sind $C_1$- bis $C_8$-Alkylester der Acrylsäure, der Methacrylsäure oder der 2-Fluoracrylsäure, Styrol oder substituierte Styrole oder deren deuterierte Derivate. Bevorzugt werden die Ester der Methacrylsäure und der 2-Fluoracrylsäure und Styrol, insbesondere deren fluor-, chlor- oder deuteriumhaltige Derivate. Besonders bevorzugt sind der Methacrylsäuremethylester, der 2-Fluoracrylsäuremethylester, und der 2-Fluoracrylsäurehexafluorisopropylester, Styrol, Trifluorstyrol, Pentafluorstyrol sowie deren deuterierte Derivate Methacrylsäuremethylester-$d_8$, der 2-Fluoracrylsäuremethylester-$d_5$, und der 2-Fluoracrylsäurehexafluorisopropylester-$d_3$, Styrol-$d_8$, Trifluorstyrol-$d_5$ und Pentafluorstyrol-$d_3$.

Die erfindungsgemäße Formmasse wird durch radikalische Blockpolymerisation oder durch Polymerisation in Lösung, Suspension oder Emulsion, insbesondere durch Blockpolymerisation einer Verbindung der Formel I und gegebenenfalls einer weiteren copolymerisierbaren Vinylverbindung hergestellt.

Geeignete radikalisch wirksame Initiatoren sind Azoverbindungen wie Azo-bisisobutyronitril, Azo-bis-(cyclohexylcarbonitril), Azo-bis-(t-octan), 2-Phenglazo-2,4-dimethyl-4-methoxyvaleronitril und organische Peroxide wie t-Butylperoxid, t-Butylperoctanoat, t-Butylperoxiisopropylcarbonat, t-Butylhydroperoxid, t-Butylperoxyisobutyrat, Dicumylperoxid. Die Menge des Initiators liegt im Bereich von 0,001 bis 3,0, vorzugsweise 0,035 bis 1,0 mol pro 100 mol des oder der Monomeren. Die Polymerisation kann auch in Gegenwart eines Kettenübertragungsmittels (Reglers) stattfinden. Hierfür eignen sich insbesondere Merkaptane wie n- oder t-Butylmerkaptan, Propylmerkaptan, Phenylmerkaptan, t-Hexylmerkaptan und Butylen-1,4-dithiol sowie Ester der Merkaptoessigsäure, beispielsweise Methylmerkaptoacetat, Ethylenglykolbis(merkaptoacetat). Die Polymerisationstemperatur beträgt 20 bis 180 °C, vorzugsweise 40 bis 160 °C, besonders bevorzugt 60 bis 140 °C.

Es ist empfehlenswert, das Gemisch vor der Polymerisation zu entgasen. Hierzu wird das Reaktionsgemisch aus Monomeren, einem oder auch mehreren Initiatoren und Reglern in einem Reaktor zunächst auf eine Temperatur von mindestens - 80 °C abgekühlt, dann wird der Reaktor evakuiert und in verschlossenem Zustand auf eine Temperatur von 0 bis 25 °C erwärmt; dieser Vorgang wird vorzugsweise mehrere Male wiederholt. Alternativ kann das Reaktionsgemisch auch für die Dauer von 1 bis 60 min, vorzugsweise 5 bis 30 min mit einem Strom von Wasserstoff-, Helium-, Argon- oder Stickstoffgas durchströmt werden, der mittels eines eintauchenden Begasungsrohres bis auf den Boden des Reaktors geleitet wird.

Die erfindungsgemäße Formmasse entsteht in Form einer glasklaren Masse, die thermoplastisch verformbar ist. Sie ist daher vor allem als Material zur Herstellung von transparenten Gegenständen geeignet, z.B. Resistmaterialien, Linsen, Lichtwellenleitern und, allein oder gemischt mit einem anderen Polymeren, welches einen anderen Orientierungsdoppelbrechungskoeffizienten aufweist, als Material für optische Datenspeicher. Die spektrale Durchlässigkeit der Formmasse ist besonders hoch im Wellenlängenbereich zwischen 400 und 900 nm, insbesondere, wenn Monomere zur Herstellung der Formmassen eingesetzt wurden, in denen die Wasserstoffatome ganz oder weitgehend durch Fluor-, Chlor- oder Deuteriumatome ersetzt wurden.

Erfindungsgemäß können aus den genannten Polymeren insbesondere Lichtwellenleiter, darunter Lichtwellenleiter mit Kern-Mantelstruktur hergestellt werden. Die Lichtwellenleiter können die genannten Polymeren sowohl im Kern als auch im Mantel enthalten. Bei der Auswahl des Kern- und des Mantelmaterials ist zu beachten, daß die Brechungsindices des Kernmaterials $n_K$ und des Mantelmaterials $n_M$ eines Lichtwellenleiters die Gleichung

$$^{n}K - {}^{n}M > 0,01$$

erfüllen. Vorzugsweise werden als Kernmaterialien solche Polymeren eingesetzt, die Monomereinheiten der Formel I enthalten, in denen X ein Wasserstoff- oder ein Deuteriumatom und R eine lineare oder verzweigte $C_1$-$C_{10}$-Alkylgruppe bedeutet, in der die Wasserstoffatome ganz oder teilweise durch Fluor-, Chlor- oder Deuteriumatome ersetzt sind, sowie Copolymere, die unterschiedliche Monomereinheiten der Formel I enthalten, in denen X ein Wasserstoff- oder ein Deuteriumatom und R unterschiedliche lineare oder verzweigte Alkylgruppe mit 1 bis 10 Kohlenstoffatomen bedeutet, in der die Wasserstoffatome ganz oder teilweise durch Fluor-, Chlor- oder Deuteriumatome ersetzt sind. Besonders bevorzugt sind Polymere und Copolymere, die Einheiten der Formel I enthalten, in denen die Säurekomponente 2,3-Difluoracrylsäure oder 3-Deutero-2,3-difluoracrylsäure, insbesondere 3-Deutero-2,3-difluoracrylsäure und die Alkoholkomponente Methanol, ein fluor- oder chlorhaltiger, linearer oder verzweigter Alkohol mit 2 bis 10 Kohlenstoffatomen, insbesondere Methanol, fluor- und chlorhaltige verzweigte Alkohole mit 3 bis 10 Kohlenstoffatomen, insbesondere Methanol-$d_3$, 2-Deuterohexafluorisopropanol, Perfluor-2,3-dimethyl-2-butanol, oder eine $C_6$-$C_{10}$-Arylhydroxyverbindung, vorzugsweise Pentachlor- oder Pentafluorphenol ist.

Die Lichttransmission dieser Lichtwellenleiter ist deutlich verbessert, verglichen mit dem Stand der Technik und mit Lichtwellenleitern, die Polymere enthalten, die sich von Monomereinheiten ableiten, die noch Wasserstoffatome enthalten. Daher können die aus diesen Polymeren gefertigten Lichtwellenleiter auch im Wellenlängenbereich von 850 nm eingesetzt werden, in dem leistungsstarke Leuchtdioden und Halbleiterlaser sowie Empfänger zur Verfügung stehen, sodaß zugleich große Übertragungslängen für Lichtsignale sowohl in den erfindungsgemäßen polymeren Lichtwellenleitern als auch in Quarzglaslichtwellenleitern ermöglicht werden. Als Mantelmaterialien werden Copolymere eingesetzt, die Monomereinheiten enthalten, die sich von Formel I ableiten und aufgrund ihres, verglichen mit dem Kernmaterial, höheren Gehaltes an Monomereinheiten der Formel I, in der R für einen Alkylrest steht, in dem die Wasserstoffatome ganz oder weitgehend durch Fluoratome ersetzt sind, einen niedrigeren Brechungsindex aufweisen.

Daneben können Polymere als Mantelmaterialien eingesetzt werden, die Monomereinheiten enthalten, die sich von Fluoralkylestern, insbesondere vom Hexafluorisopropylester oder vom Perfluor-2,3-dimethyl-2-butylester der 2-Fluoracrylsäure oder von Perfluor-2,3-dimethyl-2-butylester der 2,3-Difluoracrylsäure ableiten, sowie Copolymere, die Monomereinheiten enthalten, die sich vom Tetrafluorethylen, vom Perfluoralkylvinylethern sowie von ω-Alkoxycarbonylperfluor(alkylvinylether)n, insbesondere vom (Perfluor-3-oxa-4-pentenylcarbonsäure)methylester oder vom (Perfluor-4-oxa-5-hexenylcarbonsäure)methylester ableiten.

Darüberhinaus können 2,3-Difluoracrylsäureester als Mantelmaterialien in Lichtwellenleitern eingesetzt werden, deren Kern aus Polymeren, die sich von Monomereinheiten herleiten, die nicht der Formel (I) entsprechen, Ester der Methacrylsäure, der Acrylsäure, der 2-Fluoracrylsäure, sowie Styrol und substituierte Styrole, oder aus Polycarbonaten bestehen. Polymere, die 2,3-Difluoracrylsäureester als Monomerbausteine enthalten, werden dann bevorzugt als Mantelmaterialien eingesetzt, wenn der Kern des Lichtwellenleiters aus Polymeren besteht, die 2-Fluoracrylsäureester als Monomereinheiten enthalten.

Die nachfolgenden Beispiele sollen die Erfindung erläutern.

Die Viskositätszahl (in $cm^3/g$) wurde an Lösungen von einem Gewichtsteil des Polymeren in 100 Gew.-Teilen Essigester bei 25 °C bestimmt.

Der Restmonomergehalt (angegeben in Gew.-Teilen pro 100 Teile des Polymeren) wurde gaschromatographisch mit Hilfe eines inneren Standards an Lösungen von 5 Gew.-Teilen des Polymerisats in 100 Teilen eines geeigneten Lösemittels bestimmt.

Der Brechungsindex wurde mit Hilfe eines Abbe-Refraktometers an bis zur Konstanz des Meßwerts getrockneten Gießfilmen des Polymeren aus einem geeigneten, niedrigsiedenden Lösemittel gemessen.

Die Glasumwandlungstemperatur wurde mittels Differentialkalorimetrie (DSC) bei einer Aufheizrate von 20 °C/min bestimmt.

Die Dämpfung wurde an 30 m langen Stücken der Lichtwellenleiter dadurch bestimmt, daß Licht einer Wellenlänge (650 nm, 830 nm) an einen Ende des Lichtwellenleiters eingekoppelt wurde und die Lichtintensität am anderen Ende in Abhängigkeit von der Länge des Lichtwellenleiters, der nach jeder Messung um eine bestimmte Länge verkürzt wurde, gemessen wurde. Aus einer logarithmischen Auftragung der Lichtintensitäten gegen die Länge des Lichtwellenleiters in km ergibt sich die Dämpfung als Steigung.

Zur Prüfung der Wärmebeständigkeit wurde je ein Stück des Lichtwellenleiters in normaler Umgebungsluft zwei Stunden bei den angegebenen Temperaturen gelagert und anschließend die Dämpfung gemessen.

Zur Prüfung der Biegefestigkeit ("Biegetest") wurde ein 20 bis 30 m langes Stück eines Lichtwellenleiters in die Dämpfungsmeßeinrichtung eingespannt, die Dämpfung bestimmt und ein 50 cm langes Stück dieses Lichtwellenleiters um einen Stab von 10 mm Durchmesser gewunden. Der Lichtwellenleiter wurde wieder vom Stab gelöst und gerade ausgerichtet. Danach wurde die transmittierte Lichtintensität erneut gemessen und die Erhöhung der Dämpfung infolge der Deformation des Lichtwellenleiters, umgerechnet in dB/km, zur Dämpfung des ungeschädigten Lichtwellenleiters hinzugezählt.

**Beispiel 1**

100 g 2,3-Difluoracrylsäuremethylester (Formel I: X = H, R = Methyl) wurden mit 0,3 g Dicumylperoxid versetzt und mittels eines Membranfilters (Porenweite 45 nm) filtriert und in ein partikelfrei gespültes Glasgefäß gefüllt. Das Gemisch wurde entgast, indem es für die Dauer von 20 min mit Heliumgas durchperlt wurde, wobei der Sauerstoffpartialdruck über dem Gemisch auf ein Tausendstel des Sättigungswerts herabgesetzt wurde. Das Gemisch wurde in Heliumatmosphäre auf - 60 °C abgekühlt und evakuiert. Das Glasgefäß wurde danach zugeschmolzen und das Produkt zunächst für 90 h auf 80 °C, später im Verlauf von 50 h gleichmäßig langsam auf 130 °C erwärmt. Nach dem Abkühlen des Reaktionsgemisches wurde ein glasklares Polymerisat erhalten, das die in der Tabelle 1 aufgeführten Eigenschaften aufwies.

**Beispiel 2**

Ein Gemisch aus 50 g 2,3-Difluoracrylsäurehexafluorisopropylester (Formel I: X = H, R = Hexafluorisopropyl) und 50 g 2,3-Difluoracrylsäuremethylester (Formel I: X = H, R = Methyl) wurde mit 0,3 g t-Butylperoxyisopropylcarbonat versetzt und mittels eines Membranfilters (Porenweite 45 nm) filtriert und in ein partikelfrei gespültes Glasgefäß gefüllt. Das Gemisch wurde entgast, indem es für die Dauer von 20 min mit Heliumgas durchperlt wurde, wobei der Sauerstoffpartialdruck über dem Gemisch auf weniger als ein Tausendstel des Sättigungswerts herabgesetzt wurde. Das Gemisch wurde in Heliumatmosphäre auf - 60 °C abgekühlt und evakuiert. Das Glasgefäß wurde danach zugeschmolzen und das Produkt zunächst für 90 h auf 65 °C, später im Verlauf von 50 h auf 115 °C erwärmt. Nach dem Abkühlen des Reaktionsgemisches wurde ein glasklares Polymerisat erhalten. Eigenschaften siehe Tabelle 1.

**Beispiel 3**

100 g 2,3-Difluoracrylsäuremethylester-$d_4$ (Formel I: X = D, R = Deuteromethyl) wurden mit 0,3 g Dicumylperoxid versetzt und mittels eines Membranfilters (Porenweite 45 nm) filtriert und in ein partikelfrei gespültes Glasgefäß gefüllt. Das Gemisch wurde entgast, indem das Gemisch für die Dauer von 20 min mit Heliumgas durchperlt wurde, wobei der Sauerstoffpartialdruck über dem Gemisch auf ein Tausendstel des Sättigungswerts herabgesetzt wurde. Das Gemisch wurde in Heliumatmosphäre auf - 60 °C abgekühlt und evakuiert. Das Glasgefäß wurde danach zugeschmolzen und das Produkt zunächst für 90 h auf 80 °C, später im Verlauf von 50 h gleichmäßig langsam auf 130 °C erwärmt. Nach dem Abkühlen des Reaktionsgemisches wurden ein glasklares Polymerisat erhalten, das die Eigenschaften laut Tabelle 1 aufwies.

**Beispiel 4**

10 kg Methylethylketon und 5 kg 2,3-Difluoracrylsäurehexafluorisopropylester wurden mit 12,5 g Azobisisobutyronitril (AIBN) versetzt, mit Stickstoffgas durchperlt und 48 h bei 60 °C in Stickstoffatmosphäre gerührt. Das Produkt wurde anschließend in Benzin (Siedebereich 60 bis 80 °C) gefällt und mittels eines

Filters gesammelt. Das Produkt (Ausbeute: 91 %) wurde anschließend bis zur Gewichtskonstanz getrocknet und wies die in Tabelle 1 angegebenen Eigenschaften auf.

Tabelle 1

| Beispiel | Struktur der Monomereinheiten | | Zusammensetzung [Gew.-T.] | Viskositätszahl [$cm^3/g$] | Restmonomergehalt [%] | Brechungsindex | Glasumwandlungstemp. [°C] |
|---|---|---|---|---|---|---|---|
| | X | R | | | | | |
| 1 | H | $CH_3$ | | 48 | 0,12 | 1,43 | 140 |
| 2 | H | $CH(CF_3)_2$ | 50 | 61 | 0,14 | | |
| | H | $CH_3$ | 50 | | 0,02 | 1,38 | 120 |
| 3 | D | $CD_3$ | | 51 | 0,09 | 1,43 | 139 |
| 4 | H | $CH(CF_3)_2$ | | 57 | 0,13 | 1,34 | 98 |

**Beispiel 5**

Ein Polymerisat, das nach den Angaben in Beispiel 3 hergestellt worden war, wurde in einem Kolbenextruder aufgeschmolzen und zum Kern eines Lichtwellenleiters extrudiert. Das Polymerisat nach Beispiel 4 wurde in einen Doppelschneckenextruder mit Entgasungszone eingespeist und zum Mantel des Lichtwellenleiters verarbeitet. Die Eigenschaften des Lichtwellenleiters werden in Tabelle 2 beschrieben.

**Beispiele 6 und 7**

Ein Polymerisat, das nach den Angaben in Beispiel 2 hergestellt worden war, wurde in einem Kolbenextruder aufgeschmolzen und zum Kern eines Lichtwellenleiters extrudiert. Ein Copolymerisat, das sich zu 60 Gew.-Teilen vom Tetrafluorethylen, zu 34 Gew.-Teilen vom Perfluorpropylvinylether und zu 6 Gew.-Teilen vom (Perfluor-3-oxa-4-pentenylcarbonsäure)methylester (Schmelzindex: 13 g/10 min bei 230 °C, 3,8 kg Auflagegewicht) ableitet, wurde in einen Doppelschneckenextruder mit Entgasungszone eingespeist und zum Mantel des Lichtwellenleiters verarbeitet. Die Eigenschaften des Lichtwellenleiters werden in Tabelle 2 beschrieben.

**Beispiel 8**

Ein Gemisch aus 50 g 2-Fluoracrylsäurehexafluorisopropylester und 50 g 2-Fluoracrylsäuremethylester enthielt, wurde mit 0,02 g t-Butylperoxyisopropylcarbonat und 0,15 g Butylmerkaptan versetzt und mittels eines Membranfilters (Porenweite 45 nm) filtriert und in ein partikelfrei gespültes Glasgefäß gefüllt. Das Gemisch wurde entgast, indem das Gemisch für die Dauer von 20 min mit Heliumgas durchperlt wurde, wobei der Sauerstoffpartialdruck über dem Gemisch auf ein Tausendstel des Sättigungswerts herabgesetzt wurde. Das Gemisch wurde in Heliumatmosphäre auf -60 °C abgekühlt und evakuiert. Das Glasgefäß wurde danach zugeschmolzen und das Produkt zunächst für 15 h auf 75 °C, später für weitere 24 h auf 115 °C erwärmt. Nach dem Abkühlen des Reaktionsgemisches wurden ein glasklares Polymerisat erhalten.

Das Polymerisat wurde in einem Kolbenextruder aufgeschmolzen und zum Kern eines Lichtwellenleiters extrudiert. Ein Polymerisat, das nach den Angaben in Beispiel 4 hergestellt worden war, wurde in einem Doppelschneckenextruder mit Entgasungszone aufgeschmolzen und zum Mantel des Lichtwellenleiters verarbeitet. Die Eigenschaften des Lichtwellenleiters werden in Tabelle 2 beschrieben.

Tabelle 2

| Beispiel | Struktur der Monomereinheiten im Kern | | Zusammensetzung | Dämpfung 650 nm [dB/km] | Dämpfung 830 nm [dB/km] | Dämpfung bei 650 nm nach 2 h Wärmeschrank | | Dämpfung bei 650 nm nach Biegetest [dB/km] |
|---|---|---|---|---|---|---|---|---|
| | X | R | | | | [dB/km] | [°C] | |
| 5 | D | $CD_3$ | | 75 | 80 | 80 | 95 | 82 |
| 6 | H<br>H | $CH_3$<br>$CH(CF_3)$ | 50<br>250 | 140 | 350 | 153 | 80 | 160 |
| 7 | H | $C_5H_{11}$ | | 165 | -- | 170 | 80 | -- |
| 8 | *) | | | 70 | 310 | 320 | 110 | 350 |

*) Copolymer aus 50 Gew.-Teilen 2-Fluoracrylsäurehexafluorisopropylester und 50 Gew.-Teilen 2-Fluoracrylsäuremethylester

## Patentansprüche

1. Transparente thermoplastische Formmasse, bestehend aus 10 bis 100 Gew.-% an Einheiten, die sich von einem oder mehreren Estern der Formel I ableiten

$$CFX = CF - \underset{\underset{O}{\|}}{C} - OR \qquad (I),$$

worin
X ein Wasserstoffatom oder ein Deuteriumatom und
R eine lineare, oder verzweigte
$C_1$-$C_{10}$-Alkylgruppe oder eine $C_6$-$C_{10}$-Arylgruppe
ist, wobei in R die Wasserstoffatome ganz oder teilweise durch Fluor-, Chlor-, Brom- oder Deuteriumatome ersetzt sein können, und
90 bis 0 Gew.-% an Einheiten, die sich von anderen copolymerisierbaren Vinylverbindungen ableiten.

2. Formmasse nach Anspruch 1, dadurch gekennzeichnet, daß sie Einheiten der Formel I enthält, worin X ein Deuteriumatom und R eine Methylgruppe, eine fluor- oder chlorhaltige verzweigte
$C_3$-$C_{10}$-Alklgruppe, eine $C_6$-$C_{10}$-Arylgruppe
ist, wobei in R weitere Wasserstoffatome durch Deuteriumatome ersetzt sein können.

3. Verwendung der Formmasse nach Anspruch 1 zur Herstellung von Lichtwellenleitern.

4. Lichtwellenleiter mit Kern-Mantel-Struktur wobei der Brechungsindex des Kernmaterials um 0,01 größer ist als der Brechungsindex des Mantelmaterials, dadurch gekennzeichnet, daß der Kern aus einer Formmasse nach Anspruch 1 besteht.

5. Lichtwellenleiter nach Anspruch 4, dadurch gekennzeichnet, daß sowohl der Kern als auch der Mantel jeweils aus einer Formmasse nach Anspruch 1 besteht.

6. Lichtwellenleiter nach Anspruch 4, dadurch gekennzeichnet, daß der Kern aus einem Poly(2-fluoracrylsäurealkylester), der Mantel aus einer Formmasse nach Anspruch 1 besteht.

7. Lichtwellenleiter nach Anspruch 4, dadurch gekennzeichnet, daß der Kern aus einer Formmasse nach Anspruch 1 besteht und der Mantel aus einem Copolymeren besteht, das Monomereinheiten enthält, die sich vom Tetrafluorethylen, von einem Perfluoralkylvinylether oder von einem ω-Alkoxycarbonylperfluoralkylvinylether ableiten.

## Claims

1. A transparent thermoplastic molding compound consisting of 10 to 100% by weight of units derived from one or more esters of formula I:

$$CFX=CF-\underset{\underset{O}{\|}}{C}-OR \qquad (I)$$

wherein
X is a hydrogen atom or a deuterium atom and
R is a linear or branched $C_1$-$C_{10}$ alkyl group or a $C_6$-$C_{10}$ aryl group, it being possible for all or some of the hydrogen atoms in R to be replaced with fluorine, chlorine, bromine or deuterium atoms, and 90 to 0% by weight of units derived from other copolymerizable vinyl compounds.

2. A molding compound as claimed in claim 1 containing units of formula I in which X is a deuterium atom and R is a methyl group, a fluorinated or chlorinated branched $C_3$-$C_{10}$ alkyl group or a $C_6$-$C_{10}$ aryl group, it being possible for further hydrogen atoms in R to be replaced with deuterium atoms.

3. Use of the molding compound as claimed in claim 1 for the manufacture of beam waveguides.

**4.** A beam waveguide with a core-sheath structure in which the refractive index of the core material is 0.01 greater than the refractive index of the sheath material, wherein the core consists of a molding compound as claimed in claim 1.

**5.** A beam waveguide as claimed in claim 4, wherein both the core and the sheath consist of a molding compound as claimed in claim 1.

**6.** A beam waveguide as claimed in claim 4, wherein the core consists of a polyalkyl 2-fluoroacrylate and the sheath consists of a molding compound as claimed in claim 1.

**7.** A beam waveguide as claimed in claim 4, wherein the core consists of a molding compound as claimed in claim 1 and the sheath consists of a copolymer containing monomer units derived from tetrafluoroethylene, from a perfluoroalkyl vinyl ether or from an ω-alkoxycarbonylperfluoroalkyl vinyl ether.

## Revendications

**1.** Mélange à mouler thermoplastique et transparent, constitué :
de 10 à 100 % en poids de motifs qui dérivent d'un ou plusieurs esters de formule I :

$$CFX = CF - \underset{\underset{O}{\|}}{C} - OR \qquad (I)$$

où :

- X est un atome d'hydrogène ou de deutérium, et
- R est un groupe alkyle en $C_1$-$C_{10}$ à chaîne droite ou ramifiée, ou encore un groupe aryle en $C_6$-$C_{10}$, les atomes d'hydrogène se trouvant dans R pouvant en totalité ou en partie être remplacés par des atomes de fluor, de chlore, de brome ou de deutérium, et

de 90 à 0 % en poids de motifs qui dérivent d'autres composés vinyliques copolymérisables.

**2.** Mélange à mouler selon la revendication 1, caractérisé en ce qu'il contient des motifs de formule I, où X est un atome de deutérium et R est un groupe méthyle, un groupe alkyle en $C_3$-$C_{10}$ à chaîne ramifiée, fluoré ou chloré, un groupe aryle en $C_6$-$C_{10}$, d'autres atomes d'hydrogène se trouvant dans R pouvant être remplacés par des atomes de deutérium.

**3.** Utilisation du mélange à mouler selon la revendication 1 pour préparer des guides d'ondes.

**4.** Guide d'ondes ayant une structure coeur-gaine, l'indice de réfraction du matériau de coeur étant de 0,01 supérieur à l'indice de réfraction du matériau de gaine, caractérisé en ce que le coeur est constitué d'un mélange à mouler selon la revendication 1.

**5.** Guide d'ondes selon la revendication 4, caractérisé en ce que tant le coeur que la gaine sont chacun constitués d'un mélange à mouler selon la revendication 1.

**6.** Guide d'ondes selon la revendication 4, caractérisé en ce que le coeur est constitué d'un poly(2-fluoroacrylate d'alkyle), et la gaine est constituée d'un mélange à mouler selon la revendication 1.

**7.** Guide d'ondes selon la revendication 4, caractérisé en ce que le coeur est constitué d'un mélange à mouler selon la revendication 1, et la gaine est constituée d'un copolymère contenant des motifs monomères qui dérivent du tétrafluoréthylène, d'un oxyde de perfluoroalkyle et de vinyle, ou encore d'un ω-alcoxycarbonyl(oxyde de perfluoralkyle et de vinyle).